# EUROPÄISCHE PATENTANMELDUNG

(11) **EP 4 086 773 A1**
(43) Veröffentlichungstag der Anmeldung: **09.11.2022**
(21) Anmeldenummer: 22163414.0
(22) Anmeldetag: 22.03.2022
(51) Int. Cl.: G06F 11/36

(54) **COMPUTERIMPLEMENTIERTES VERFAHREN ZUM AUTOMATISCHEN BEREITSTELLEN EINES HINWEISES FÜR TESTPROZESSE**

(30) Priorität: 04.05.2021 DE 102021111463
(71) Anmelder: dSPACE GmbH, 33102 Paderborn (DE)
(72) Erfinder: Bannenberg, Sebastian, 33102 Paderborn (DE); Beringer, Steffen, 33102 Paderborn (DE); Miller, Eduard, 33102 Paderborn (DE); Deppe, Markus, 33102 Paderborn (DE)

(57) **Zusammenfassung**

Computerimplementiertes Verfahren zum automatischen Bereitstellen eines Hinweises für Testprozesse, wobei der Hinweis durch zumindest einen Hinweis-Geber bestimmt wird und der Hinweis-Geber für Tests und / oder Simulationen manuell und / oder automatisch gewählt wird, wobei der Hinweis-Geber zumindest zwei Testausführungen beobachtet, so dass zumindest ein Ereignis in den Testausführungen erkannt wird und zumindest ein Hinweis abgeleitet wird, wobei der Hinweis-Geber durch einen Hinweis-Geber-Mechanismus automatisch während der Testausführungen ausgeführt wird und ein durch den Hinweis-Geber ermittelter Hinweis an das Testsystem und / oder einen Anwender bereitgestellt wird.

## Beschreibung

Die vorliegende Erfindung betrifft ein computerimplementiertes Verfahren zum automatischen Bereitstellen eines Hinweises für Testprozesse, wobei der Hinweis durch zumindest einen Hinweis-Geber bestimmt wird und der Hinweis-Geber für Tests und / oder Simulationen manuell und / oder automatisch gewählt wird. Der Hinweis-Geber beobachtet dabei mehrere Testausführungen, aber zumindest zwei Testausführungen, so dass zumindest ein Ereignis in den Testausführungen erkannt wird und zumindest ein Hinweis abgeleitet wird. Der Hinweis-Geber wird durch einen Hinweis-Geber-Mechanismus automatisch während der Testausführungen ausgeführt und ein durch den Hinweis-Geber ermittelter Hinweis wird dann an das Testsystem und / oder einen Anwender bereitgestellt.

Die vorliegende Erfindung betrifft des Weiteren eine Testeinheit zum automatischen Bereitstellen eines Hinweises für Testprozesse. Die vorliegende Erfindung betrifft darüber hinaus ein Computerprogramm und einen computerlesbaren Datenträger.

### Stand der Technik

Fahrassistenzsysteme wie z.B. ein adaptiver Geschwindigkeitsregler und/oder Funktionen für das hochautomatisierte bzw. autonome Fahren können mithilfe diverser Überprüfungsmethoden verifiziert bzw. validiert werden. Dabei können insbesondere Hardware-in-the-Loop Verfahren, Software-in-the-Loop Verfahren, Simulationen und/oder Testfahrten verwendet werden.

Der Aufwand, insbesondere der Zeit- und/oder Kostenaufwand, zum Testen derartiger Fahrzeugfunktionen unter Verwendung der oben genannten Überprüfungsmethoden ist dabei typischerweise sehr hoch, da eine große Anzahl potenziell möglicher Fahrsituationen getestet werden muss.

Ein zumindest teilweise autonomes Verkehrsmittel ausschließlich auf der Straße mit Fahrtstrecken über Milliarden Kilometer zu testen ist aus Zeit- und Kostengründen nicht möglich. Zudem würden viele redundante Testkilometer entstehen, während kritische und ungewöhnliche Situationen, die aber relevant für die Fähigkeiten des zumindest teilweise autonomen Fahrzeugs sind, nicht auftreten.

Dies kann insbesondere zu einem hohen Aufwand für Testfahrten als auch für Simulationen führen. DE 10 2017 200 180 A1 gibt ein Verfahren zur Verifizierung und/oder Validierung einer Fahrzeugfunktion an, welche dafür vorgesehen ist, ein Fahrzeug in Längs- und/oder Querrichtung autonom zu führen.

Das Verfahren umfasst ein Ermitteln, auf Basis von Umfelddaten bezüglich eines Umfelds des Fahrzeugs, einer Test-Steueranweisung der Fahrzeugfunktion an einen Aktuator des Fahrzeugs, wobei die Test-Steueranweisung nicht durch den Aktuator umgesetzt wird.

Das Verfahren umfasst des Weiteren ein Simulieren, auf Basis von Umfelddaten und unter Verwendung eines Verkehrsteilnehmer-Modells bezüglich zumindest eines Verkehrsteilnehmers im Umfeld des Fahrzeugs, einer fiktiven Verkehrssituation, die vorliegen würde, wenn die Test-Steueranweisung umgesetzt worden wäre.

Das Verfahren umfasst ferner ein Bereitstellen von Testdaten in Bezug auf die fiktive Verkehrssituation. Die Fahrzeugfunktion wird hierbei zum Ermitteln der Test-Steueranweisung passiv im Fahrzeug betrieben.

Nachteilhaft an diesem Verfahren ist, dass zur Verifizierung und/oder Validierung der Fahrzeugfunktion ein tatsächlicher Betrieb des Fahrzeugs zum Ermitteln der benötigten Daten erforderlich ist.

Die Hersteller von zumindest teilweise autonomen Verkehrsmitteln benötigen eine parallelisierte, simulationsbasierte Lösung. Die Testmethode "Szenariobasiertes Testen" setzt hier an. Dazu ist eine intelligente Testnachsteuerung erforderlich, die eine Bewertung von Simulationsergebnissen und / oder Testdaten vornimmt und gegebenenfalls beispielsweise eine veränderte Parametrierung umsetzt.

Es ist daher Aufgabe der Erfindung, ein Verfahren, eine Testeinheit, ein Computerprogramm und einen computerlesbaren Datenträger anzugeben, welches automatisch einen Hinweis für Testprozesse bereitstellt. Gemäß der Erfindung werden gemäß einem computerimplementierten Verfahren zum automatischen Bereitstellen eines Hinweises für Testprozesse, Hinweise durch zumindest einen Hinweis-Geber bestimmt. Der Hinweis-Geber für Tests und / oder Simulationen kann in einer vorteilhaften Ausgestaltung der Erfindung manuell und / oder automatisch gewählt werden. Der Hinweis-Geber beobachtet dabei mehrere Testausführungen, so dass zumindest ein Ereignis in den Testausführungen erkannt wird und zumindest ein Hinweis abgeleitet wird. Der Hinweis-Geber wird in einer vorteilhaften Ausgestaltung durch einen Hinweis-Geber-Mechanismus automatisch während der Testausführungen ausgeführt und ein durch den Hinweis-Geber ermittelter Hinweis wird dann an das Testsystem und / oder einen Anwender bereitgestellt.

### Offenbarung der Erfindung

Die Aufgabe wird erfindungsgemäß gelöst durch ein computerimplementiertes Verfahren zum automatischen Bereitstellen eines Hinweises für Testprozesse nach Patentanspruch 1, eine Testeinheit nach Patentanspruch 13, ein Computerprogramm nach Patentanspruch 14 und einen computerlesbaren Datenträger nach Patentanspruch 15.

Ein autonomes Fahrzeug enthält eine Vielzahl von Steuergeräten. Jedes einzelne Steuergerät und deren Verbund müssen bei der Entwicklung und bei der Homologation ausgiebig getestet werden. Um die fehlerfreie Funktionsweise der Steuergeräte in jeder Verkehrssituation sicherzustellen, wird Szenario-basiert getestet. Beim Szenario-basierten Testen wird die Fahrweise des Fahrzeugs in einer möglichst realitätsnahen Verkehrssituation analysiert. Die zu analysierenden Aspekte der Verkehrssituation und deren Bewertung sind abhängig von dem zu testenden System. Dazu werden beim Szenario-basierten Testen von Systemen und Systemkomponenten zur autonomen Führung eines Kraftfahrzeugs Szenarien definiert, welche als Abstraktion einer Verkehrssituation bezeichnet werden können. Für jedes Szenario können dann wiederum Testfälle ausgeführt werden. Ein logisches Szenario ist hierbei die Abstraktion einer Verkehrssituation mit der Straße, dem Fahrverhalten und dem umliegenden Verkehr ohne konkrete Parameterwerte festzulegen. Durch die Wahl konkreter Parameterwerte wird aus dem logischen Szenario ein konkretes Szenario. Ein solches konkretes Szenario entspricht einer jeweils einzelnen Verkehrssituation.

Zur grundsätzlichen erfindungsgemäßen Unterscheidung der Verkehrsszenarien bzw. Szenarien im Szenario-basierten-Testen werden nicht nur statische Parameter, wie z.B. aber nicht ausschließlich Umfeld, Bebauung oder Fahrbahnbreite herangezogen, sondern insbesondere auch das Fahrverhalten der einzelnen Verkehrsteilnehmer. Die Bewegungen der Verkehrsteilnehmer und damit das Fahrverhalten werden durch Trajektorien beschrieben. Trajektorien beschreiben einen Pfad sowohl in räumlicher als auch in zeitlicher Richtung. Durch Parameter wie z.B. Geschwindigkeit, können Bewegungen von Verkehrsteilnehmer unterschieden werden.

Eine autonome Fahrfunktion ist durch ein System, beispielsweise ein Steuergerät, realisiert. Das Steuergerät wird herkömmlicherweise im realen Fahrzeug in realen Verkehrssituationen getestet, durch Hardware-in-the-loop Tests oder alternativ durch vollständig virtuelle Tests validiert.
Dazu kann auch eine Simulation genutzt werden.

Ein zu betrachtendes Szenario ist beispielsweise ein sogenanntes Cut-In-Szenario. Das Cut-In-Szenario kann als Verkehrssituation bezeichnet werden, bei welcher ein hochautomatisiertes bzw. autonomes Fahrzeug in einer vorgegebenen Fahrspur fährt und ein anderes Fahrzeug mit gegenüber dem Ego-Fahrzeug verringerter Geschwindigkeit von einer weiteren Fahrspur in die Fahrspur des Ego-Fahrzeugs in einem bestimmten Abstand einschert. Das Ego-Fahrzeug bezeichnet hier das zu testende Fahrzeug (SUT).

Die Geschwindigkeit des Ego-Fahrzeugs und des weiteren Fahrzeugs, welches auch als Fellow-Fahrzeug bezeichnet wird, ist dabei konstant. Da die Geschwindigkeit des Ego-Fahrzeugs höher ist als die des Fellows, muss das Ego-Fahrzeug abgebremst werden, um eine Kollision der beiden Fahrzeuge zu vermeiden.

Aber auch ein Cut-in-Szenario kann in verschiedenen Ausprägungsformen vorliegen, wie z.B. durch eine Unterscheidung in der Geschwindigkeit der Verkehrsteilnehmer.

Des Weiteren ist ein Szenario, wie ein Passing-By-Scenario, möglich, indem das Ego-Fahrzeug das überholende Fahrzeug darstellt, so dass das Ego-Fahrzeug in einer vorgegebenen Fahrspur fährt und ein anderes Fahrzeug mit gegenüber dem Ego-Fahrzeug verringerter Geschwindigkeit überholt. Dabei wechselt/schert das Ego-Fahrzeugt auf eine weitere Fahrspur aus und fährt mit höherer Geschwindigkeit an dem Fellow-Fahrzeug vorbei. Die Geschwindigkeit des Ego-Fahrzeug muss in diesem Szenario nicht konstant sein. Nachdem das Ego-Fahrzeug an dem Fellow-Fahrzeug vorbeigefahren ist, schert das Ego-Fahrzeug wieder auf die vorherige Fahrspur ein.

Solche Szenarien können mit unterschiedlichen Parameterwerten simuliert werden. Um einen möglichst hohen Erkenntnisgewinn über Testverläufe zu erlangen muss der Testprozess überwacht und in einer Testnachsteuerung darauf reagiert werden. Ziel muss eine Bewertung des "Subject under Test" bzw. des "System under Test" (SUT) im gesamten Parameterraum mit möglichst geringem Ressourcenaufwand zu erhalten. Es soll also Simulations- und Rechenzeit ressourcenschonend eingesetzt und eine hohe Testabdeckung und Homologation erreicht werden. Im Rahmen des Testprozesses wird damit eine Vielzahl vergleichbarer Simulationen / Tests mit abweichender Parametrierung durchgeführt. Damit bezogen auf den gesamten Testprozess bestmöglich Ressourcen-Ausnutzung erfolgen kann und vor allem aussagekräftige Testbedingungen sowie aussagekräftige Parameterwerte im Parameterraum gewährleistet werden können, müssen mehrere Testausführungen beobachtet werden. Häufig treten bei einem oder mehreren Testausführungen einzeln oder im Verbund Ereignisse auf, auf die der Anwender möglichst zeitnah reagieren möchte.

Ein solches relevantes Ereignis kann sich aus Zusammenhängen der Testergebnisse ergeben und / oder auch durch beispielsweise Kapazitätsgrenzen einer mit Testergebnissen zu beschreibender Festplatte. Ein solches Ereignis kann durch den Anwender manuell detektiert werden, indem er den Testprozess beobachtet. Dies ist sehr aufwendig und ggf. bei einer sehr hohen Testanzahl unmöglich.

Wenn Testergebnisse manuell analysiert werden, kann nicht rechtzeitig auf die relevanten Ereignisse reagiert werden, sodass der Test ggf. zu lange läuft und / oder unnötige Kosten verursacht und / oder fälschlicherweise abbricht. Damit wird der Bedarf und Aufgabe der Erfindung ersichtlich, sodass durch eine Unterstützung des Anwenders in der Analyse und Reaktion auf relevante Ereignisse Testprozesse und insbesondere das Beobachten von mehreren Testausführungen automatisiert wird und dem Anwender und / oder dem Testsystem durch einen automatisch erzeugten Hinweis eine effiziente Testgestaltung ermöglicht wird.

Die Erfindung sieht dazu in einer vorteilhaften Ausgestaltung einen Hinweis-Geber-Mechanismus vor. In einer weiteren vorteilhaften Ausgestaltung werden die Hinweis-Geber als Hinweis-Geber-Plug-Ins realisiert und der Hinweis-Geber-Mechanismus als Hinweis-Geber-Plug-In-Mechanismus. Andere Realisierungen sollen von dem erfindungsgemäßen Verfahren umfasst sein.

Ein Hinweis-Geber-Plug-In-Mechanismus, alternativ auch Advisor-Plug-In-Mechanismus, hält Hinweis-Geber-Plug-Ins vor, alternativ auch Advisor-Plug-Ins. So können in einer weiteren Ausgestaltung beispielsweise Hinweis-Geber-Plug-Ins per Drag & Drop einem Hinweis-Geber-Plug-In-Mechanismus zugeordnet werden. Eine Zuordnung ist auch durch andere manuelle Schritte erfindungsgemäß möglich, des Weiteren kann je nach Test / Simulation auch eine automatische Zuordnung von Hinweis-Geber-Plug-Ins erfolgen. Zudem können insbesondere zurzeit nicht verwendete Hinweis-Geber-Plug-Ins in einem Hinweis-Geber-Plug-In-Pool gehalten und verwaltet werden.

Ein Hinweis-Geber-Plug-In besteht aus einem Skript und einer Konfigurationsdatei. Neben allgemeinen Daten des Hinweis-Geber-Plug-Ins wie dem Namen, der Einheit des Hinweis-Wertes etc. können über die Konfigurationsdatei die Grenzen des Hinweis-Wertes festgelegt werden, anhand derer die korrespondierende Aktion (Hinweis, Warnung oder Abbruch) ausgeführt werden. Das Skript ist anhand vordefinierter Schnittstellen als Hinweis-Geber-Plug-In geschrieben und wird von dem Hinweis-Geber-Plug-In-Mechanismus nach Auswahl des Hinweis-Gebers gehalten.

Die Hinweis-Geber-Plug-Ins werden in einer Datenbank einem Hinweis-Geber-Plug-In-Pool gehalten und dem Hinweis-Geber-Plug-In Mechanismus beim Aufsetzen des Tests / der Simulation zugewiesen. Während der Testausführung beobachtet der Hinweis-Geber-Plug-In-Mechanismus die entstehenden Ergebnisse. Liegen neue Ergebnisse vor, werden die Ergebnisse aufgesammelt und gegebenenfalls aufbereitet. Anschließend wird jedes Hinweis-Geber-Plug-In einzeln ausgeführt. Bei jeder Hinweis-Geber-Plug-In Ausführung werden die neuen Ergebnisse dem Hinweis-Geber-Plug-In übergeben. Das Hinweis-Geber-Plug-In Skript berechnet aus den Ergebnissen den Hinweis-Wert. Abhängig vom Hinweis-Wert wird anhand der Grenzwerte in der Konfiguration eine Aktion ausgewählt und automatisch ausgeführt. In dem Testergebnis werden sowohl der Hinweis-Wert als auch die Aktion hinterlegt.

Mögliche Aktionen sind zum Beispiel ein Hinweis oder eine Warnung an den Anwender. Neben der Nachricht kann das Hinweis-Geber-Plug-In auch eine Termination des Testprozesses veranlassen. Dabei können alle laufenden Simulationen gestoppt oder zu Ende ausgeführt werden. Weitere geplante Ausführungen werden aus der Ausführungsroutine herausgenommen. Ein Hinweis-Geber-Plug-In hat auch die Möglichkeit keine Aktion zu veranlassen. In diesem Fall wird der Hinweis-Wert lediglich in dem Testergebnis hinterlegt.

Angenommen es soll ein Notbremsassistent mit drei Auffahr-Szenarien getestet werden. Jedes Szenario soll mit 100 verschiedenen konkreten Ausprägungen (konkreten Szenarien, Parameter Sätzen) abgetestet werden. Bei der Testdefinition werden beispielsweise zwei Hinweis-Geber-Plug-Ins (API-1 und API-3) mit je einer Konfigurationsdatei und einem Skript ausgewählt. Das erste Hinweis-Geber-Plug-In (API-1) beinhaltet folgende Punkte:
- Wenn mindestens 10 (N) Testfahrten absolviert sind, untersuche die Kollisionsrate in Bezug auf die simulativ gefahrenen Testkilometer.
   ∘ Bei min. durchschnittlich 2 (X) Kollisionen auf 1.000 km gib dem Anwender einen Hinweis auf einem erhöhten Kollisionsvorkommen.
   ∘ Bei min. 3 (Y) Kollisionen auf 1.000 km warne den Anwender auf das erhöhte Kollisionsvorkommen.
   ∘ Bei min 4 (Z) Kollisionen auf 1.000 km brich den Testprozess mit dem Szenario ab und starte die Analyse mit dem nächsten Testszenario.
- Falls alle Testfahrten mit dem ersten Szenario simulativ ausgeführt wurden und keine (0, A) Kollision aufgetreten ist, überspringe die Analysen der nachfolgenden Testszenarien.
Bei diesem Hinweis-Geber-Plug-In (API-1) sind in der Konfigurationsdatei zum Beispiel unter anderem die Größen N, X, Y, Z und A wählbar.

Das zweite Hinweis-Geber-Plug-In (API-2) soll folgende Punkte beinhalten:
- Sammle bei allen Testfahrten die Ausführungsdauer auf und bilde für jedes Szenario den Durchschnitt.
- Da die Anzahl an maximalen Testfahrten der einzelnen Szenarien bekannt ist, kann mit den Durchschnitten der jeweiligen Ausführungsdauer die Ausführungszeit der Tests der jeweiligen Szenarien einzeln und deren Summe berechnet werden.
- Wenn die Länge der Ausführung eines Szenarios auf länger als 1/3 der maximalen Gesamtzeit (G) abgeschätzt wird, schicke dem Anwender eine Warnung.
- Wenn die Summe der Ausführungslängen der einzelnen Szenarien die maximale Gesamtzeit überschreitet (ggf. addiert mit einem Ungenauigkeitsfaktor), warne den Anwender und brich den gesamten Test ab (Termination und Umpriorisierung).

Durch die Hinweis-Geber-Plug-Ins (API-1 und API-2) kann der Testprozess ressourcenschonend ausgestaltet werden und unnötige verlängernde Test können frühzeitig erkannt werden und entsprechend darauf reagiert werden.

Während des Testprozesses werden nach und nach die einzelnen konkreten Szenarien simuliert. Der Hinweis-Geber-Plug-In Mechanismus beobachtet die entstehenden Ergebnisse und stellt diese den Hinweis-Geber-Plug-Ins zur Verfügung. Die Hinweis-Geber-Plug-Ins berechnen jeweils einzeln die Hinweis-Werte und veranlassen über den Hinweis-Geber-Plug-In Mechanismus die Ausführung der ermittelten Hinweise oder alternativ der ermittelten Advice.

Weitere Ausführungsformen der vorliegenden Erfindung sind Gegenstand der weiteren Unteransprüche und der nachfolgenden Beschreibung unter Bezugnahme auf die Figuren.

Die Testeinheit umfasst Mittel zum automatischen Bereitstellen eines Hinweises für Testprozesse.

Gemäß einem weiteren Aspekt der Erfindung ist ferner ein Computerprogramm mit Programmcode vorgesehen, um das erfindungsgemäße Verfahren durchzuführen, wenn das Computerprogramm auf einem Computer ausgeführt wird. Gemäß einem weiteren Aspekt der Erfindung ist ein Datenträger mit Programmcode eines Computerprogramms vorgesehen, um das erfindungsgemäße Verfahren durchzuführen, wenn das Computerprogramm auf einem Computer ausgeführt wird.

Die hierin beschriebenen Merkmale des computerimplementierten Verfahrens sind zum automatischen Bereitstellen eines Hinweises für Testprozesse verwendbar. Ebenfalls ist die erfindungsgemäße Testeinheit dazu geeignet, eine Testnachsteuerung von einer Vielzahl unterschiedlicher Vorrichtungen bzw. Steuergeräte von z.B. Automobilen, Nutzfahrzeugen und / oder kommerziellen Fahrzeugen, Schiffen oder Flugzeugen durchzuführen durch einen Hinweis beispielsweise zu Simulationsergebnissen und / oder Simulationsschritten unterschiedlicher Szenarien bzw. Fahrsituationen.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Figur 1: zeigt eine schematische Darstellung zur erfindungsgemäßen Unterscheidung von Szenarios,
- Figur 2: zeigt eine schematische Ansicht, die eine Grenze zwischen kritischen und nicht-kritischen Testergebnissen angibt,
- Figur 3: zeigt eine erfindungsgemäße Darstellung eines Hinweis-Geber-Plug-Ins
- Figur 4: zeigt eine schematische Darstellung zur erfindungsgemäßen Beschreibung des Hinweis-Geber-Plug-In-Mechanismus und des Hinweis-Geber-Plug-Ins
- Figur 5: zeigt eine schematische Darstellung zur erfindungsgemäßen Beschreibung der Verwendung von Hinweis-Geber-Plug-Ins
- Figur 6: zeigt eine schematische Darstellung zur erfindungsgemäßen Beschreibung der Verwendung von Hinweis-Geber-Plug-Ins
- Figur 7: zeigt den Ablauf den erfindungsgemäßen Einsatz des Hinweis-Geber-Plug-In-Mechanismus und Hinweis-Geber-Plug-Ins
- Figur 8: zeigt mögliche Ausprägungen eines erfindungsgemäßen Hinweises

### Ausführliche Beschreibung der Ausführungsformen

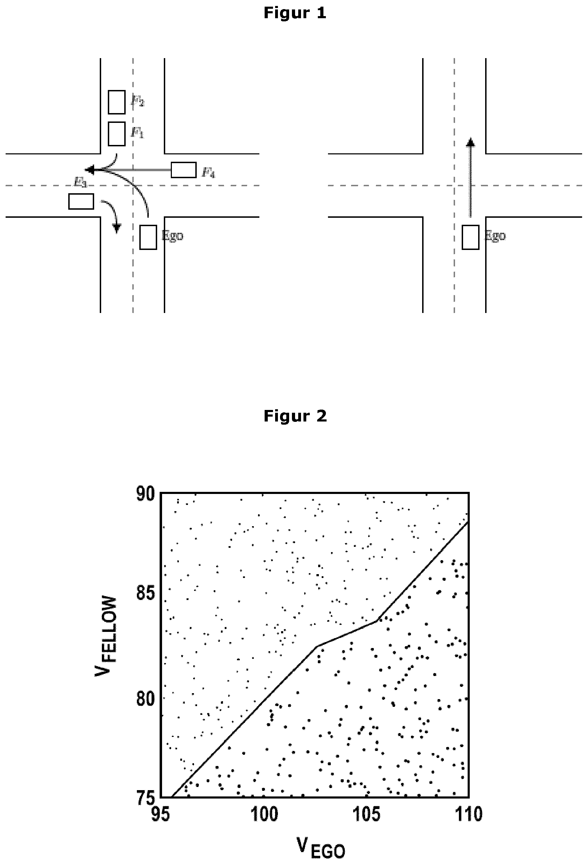

Figur 1 beschreibt zwei verschiedene Szenarien S1 und S2. Es wird jeweils ein Kreuzungsbereich dargestellt. In beiden Szenarien S1 und S2 ist ein Ego-Fahrzeug (Ego) dargestellt. In S1 führt das Ego-Fahrzeug (Ego) ein Abbiegemanöver durch. Das Egofahrzeug ist auch das "Subject under Test" bzw. des "System under Test" (SUT). Es sind dabei vier Fellowfahrzeuge (F1 bis F4) beteiligt. In S2 folgt das Ego-Fahrzeug dem Fahrverlauf geradeaus ohne Beteiligung von Fellowfahrzeugen. Es liegen demnach Unterschiede in den Szenerie-Parametern wie auch Fahrsituationsparameter vor. Ziel in den Szenarien kann z.B. die Testung und Simulation eines Abstandsregeltempomat sein.

Die Testung und Simulation eines solchen Abstandsregeltempomat erfordert gegebenenfalls eine vielfache Testnachsteuerung, um ein valides Testergebnis zu erhalten. Über die Menge der Testausführungen entstehen viele Testergebnisse, so dass über den Verlauf der Ergebnisse relevante Ereignisse aufgezeigt werden können. Relevante Ereignisse können über ein Hinweis-Geber-Plug-In (API) erkannt werden, wie er bereits vorgestellt wurde. Das aufgeführte Hinweis-Geber-Plug-In (API-1) kann Zusammenhänge in Kollisionsraten erkennen, wie:
- Wenn mindestens 10 (N) Testfahrten absolviert sind, untersuche die Kollisionsrate in Bezug auf die simulativ gefahrenen Testkilometer.
   ∘ Bei min. durchschnittlich 2 (X) Kollisionen auf 1.000 km gib dem Anwender einen Hinweis auf einem erhöhten Kollisionsvorkommen.
   ∘ Bei min. 3 (Y) Kollisionen auf 1.000 km warne den Anwender auf das erhöhte Kollisionsvorkommen.
   ∘ Bei min 4 (Z) Kollisionen auf 1.000 km brich den Testprozess mit dem Szenario ab und starte die Analyse mit dem nächsten Testszenario.
- Falls alle Testfahrten mit dem ersten Szenario simulativ ausgeführt wurden und keine (0, A) Kollision aufgetreten ist, überspringe die Analysen der nachfolgenden Testszenarien.
Bei diesem Hinweis-Geber-Plug-In (API-1) sind in der Konfigurationsdatei zum Beispiel unter anderem die Größen N, X, Y, Z und A wählbar. Somit können für ein Szenario S1 abweichende Größen verwendet werden als in Szenario S2, aber für beide Szenarien können relevante Zusammenhänge erkannt und behandelt werden.

Figur 2 zeigt eine Funktion, die eine Grenze zwischen kritischen und nicht-kritischen Testergebnissen angibt. Die dargestellten Punkte sind simulierte Testergebnisse. Alternativ können es auch approximierte Testergebnisse sein.

Bei der dargestellten Funktion handelt es sich um die Sicherheits-Zielfunktion, welche einen numerischen Wert aufweist, der bei einem Sicherheitsabstand zwischen dem Egofahrzeug (Ego) und dem weiteren Kraftfahrzeug, dem Fellowfahrzeug, von ≥ VFELLOW x 0,55 einen Minimalwert aufweist, bei einer Kollision zwischen dem Egofahrzeug (Ego) und dem weiteren Kraftfahrzeug einen Maximalwert aufweist, und bei einem Sicherheitsabstand zwischen dem Kraftfahrzeug und dem weiteren Kraftfahrzeug von ≤ VFELLOW x 0,55 einen numerischen Wert aufweist, welcher größer als der Minimalwert ist. Ergebnisse über eine Sicherheits-Zielfunktion können durch einen Hinweis-Geber (also auch durch einen Hinweis-Geber-Plug-In (API)) über mehrere Testausführungen hinweg beobachtet und Ereignisse detektiert werden. Dazu wird der Hinweis-Geber, also auch Hinweis-Geber-Plug-In (API) durch einen Hinweis-Geber-Mechanismus (also auch durch einen Hinweis-Geber-Plug-In-Mechanismus) automatisch während der Testausführung ausgeführt.

Alternativ zur Sicherheits-Zielfunktion kann beispielsweise eine Komfort-Zielfunktion oder eine Effizienz-Zielfunktion simuliert und / oder approximiert werden, welche einen numerischen Wert aufweist, der im Falle keiner Änderung der Beschleunigung des Kraftfahrzeugs einen Minimalwert aufweist, bei einer Kollision zwischen dem Egofahrzeug (Ego) und dem weiteren Kraftfahrzeug einen Maximalwert aufweist, und bei einer Änderung der Beschleunigung des Egofahrzeug (Ego) in Abhängigkeit des Betrags der Änderung der Beschleunigung einen numerischen Wert zwischen dem Minimalwert und dem Maximalwert aufweist. Die Mehrzahl von Fahrsituationsparametern, insbesondere die Geschwindigkeit VEGO des Egofahrzeugs (Ego) und die Geschwindigkeit VFELLOW des weiteren Kraftfahrzeugs, des Fellowfahrzeugs, werden innerhalb des vorgegebenen Definitionsbereichs z.B. durch eine Simulation erzeugt.

Zur Bewertung können in der Konfigurationsdatei eines Hinweis-Geber-Plug-Ins Größen festgelegt werden und ebenso Schwellwerte ab dem ein Hinweis ausgelöst werden soll. Demnach können beispielsweise bei einem über mehrere Testausführungen hinweg hohen Wert einer Zielfunktion ein Hinweis veranlasst werden. Auch die Ausgestaltung des Hinweises ist konfigurierbar und damit zur Testausführung automatisch ausführbar.

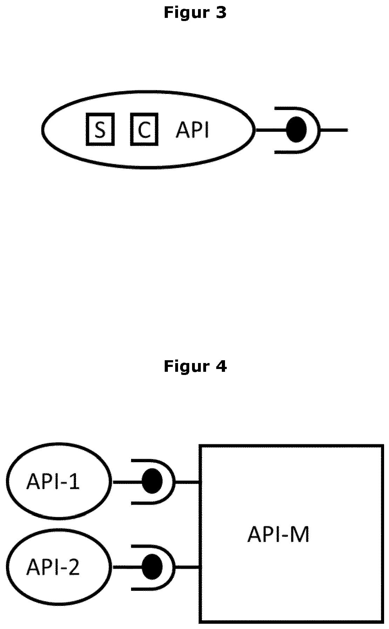

Figur 3 zeigt eine erfindungsgemäße Darstellung eines Hinweis-Geber-Plug-Ins (API). Hinweis-Geber-Plug-Ins (API) haben eine Schnittstelle zum Hinweis-Geber-Plug-In-Mechanismus. Darüber hinaus besteht ein Hinweis-Geber-Plug-In (API) aus einer Konfigurationsdatei (C) und einem ausführbaren Skript (S).

Die Konfigurationsdatei (C) gibt Informationen zur Überwachung von verschiedenen Größen in den Ergebnissen der Testausführung und / oder den Testdaten wieder.

Zusätzlich wird durch die Konfigurationsdatei (C) festgelegt, bei welchem Hinweis-Wert ein Hinweis ausgelöst werden soll und wie der Hinweis ausgestaltet ist. Es können beispielsweise bei Überschreitung einer definierten Grenze eine Warnung an den Anwender gegeben werden und / oder ein Hinweis an das Testsystem gegeben werden, den aktuellen Testprozess zu terminieren und / oder Speicherplatz zu optimieren, damit Testdaten nicht verloren gehen. Diese Aufzählung soll nicht abschließend betrachtet werden, sondern dient lediglich zur Verdeutlichung der Möglichkeiten eines Hinweis-Geber-Plug-Ins (API) und eines Hinweises.

Das ausführbare Skript (S) beinhaltet die Informationen zur Bestimmung eines Hinweis-Werts, der dann wiederum bestimmt ob und welcher Hinweis einem Nutzer und / oder einem Testsystem bereitgestellt werden soll.

Figur 4 zeigt eine schematische Darstellung zur erfindungsgemäßen Beschreibung eines Hinweis-Geber-Plug-In-Mechanismus (API-M).

Der Hinweis-Geber-Plug-In-Mechanismus (API-M) steuert die automatische Ausführung der gewählten Hinweis-Geber-Plug-Ins (API).

Alle Hinweis-Geber-Plug-Ins (API) haben eine definierte Schnittstelle zum Hinweis-Geber-Plug-In-Mechanismus (API-M). Dadurch kann in einer bevorzugten Ausführungsform dem Anwender ermöglicht werden vor Beginn des Tests und / oder der Simulation Hinweis-Geber-Plug-Ins (API) einfach für den Test auszuwählen, ohne die Schnittstelle weiter zu konfigurieren. Durch die Schnittstelle wird ebenfalls eine einfache Übertragung von Testergebnissen und / oder weiteren Testdaten von der jeweiligen Testausführung an den Hinweis-Geber-Plug-In-Mechanismus (API-M) und dann an die gewählten Hinweis-Geber-Plug-Ins (API) realisiert.

Dadurch kann eine Wiederverwendbarkeit der Hinweis-Geber-Plug-Ins (API) gewährleistet werden und die automatische Ausführung der Hinweis-Geber-Plug-Ins (API) stellt eine erhebliche Einsparung an Zeit und Ressourcen dar. Zusätzlich kann der Testprozess durch frühzeitiges Erkennen von relevanten Ereignissen in Testergebnissen und / oder weiteren Testdaten und dem Bereitstellen eines entsprechenden Hinweises optimiert werden.

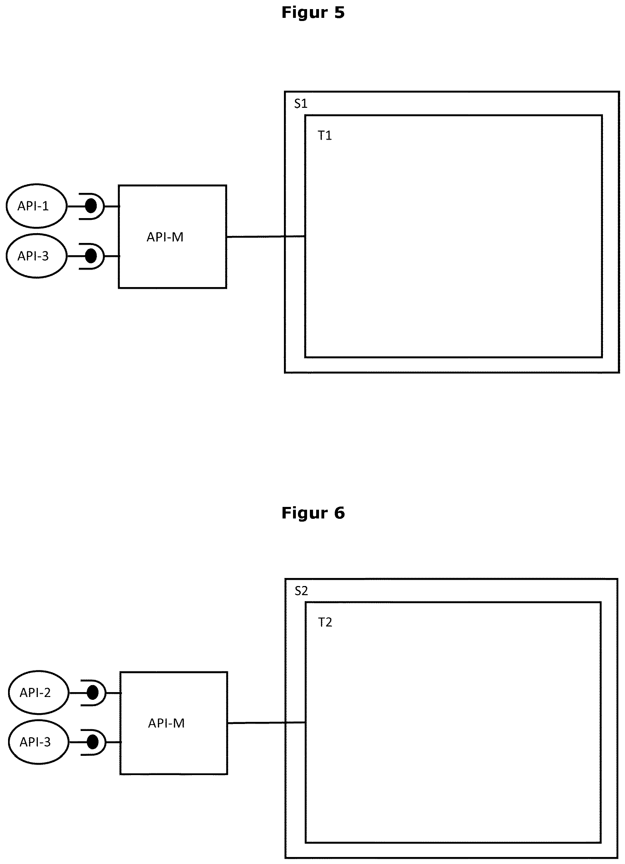

Figur 5 zeigt eine schematische Darstellung zur erfindungsgemäßen Beschreibung der Verwendung von Hinweis-Geber-Plug-Ins (API) für ein konkretes Szenario und damit in einer definierten Simulation / einem definierten Test.

Dazu wird in Figur 5 der Hinweis-Geber-Plug-In-Mechanismus (API-M) mit zwei Hinweis-Geber-Plug-Ins (API) API-1 und API-3 dargestellt. Der Hinweis-Geber-Plug-In-Mechanismus (API-M) ist in Verbindung mit einem Test T1 in einem Szenario S1 gezeigt.

Dabei sind die Hinweis-Geber-Plug-Ins (API) API-1 und API-3 nicht direkt mit dem Szenario oder dem Test verknüpft. Durch ihre generische und dynamische Definition können Hinweis-Geber-Plug-Ins (API) für verschiedene Szenarien und Tests wiederverwendet werden. Es wird demnach nicht für jedes neue Szenario oder einer abweichenden Testsituation und / oder Simulation ein neuer Hinweis-Geber-Plug-In-Mechanismus (API-M) bzw. kein neues Hinweis-Geber-Plug-In (API) erstellt.

Auch Figur 6 zeigt eine weitere schematische Darstellung zur erfindungsgemäßen Beschreibung der Verwendung von Hinweis-Geber-Plug-Ins (API) für ein konkretes Szenario und damit in einer definierten Simulation / Test.

Hier ist der Hinweis-Geber-Plug-In-Mechanismus (API-M) in Verbindung mit einem Test T2 in einem Szenario S2 dargestellt. In Figur 6 ist der Hinweis-Geber-Plug-In-Mechanismus (API-M) mit den Hinweis-Geber-Plug-Ins (API) API-2 und API-3 gezeigt. Die Hinweis-Geber-Plug-Ins (API) sind nicht direkt mit dem Szenario oder dem Test verknüpft. Es sei hierdurch verdeutlich, dass der Hinweis-Geber-Plug-In (API) API-3 sowohl in Szenario S1 und Test T1, wie durch Figur 5 gezeigt und in Szenario S2 und damit in Test T2, wie in Figur 6 gezeigt, verwendet werden kann. Diese Wiederverwendung erfolgt ohne Anpassung des entsprechenden Hinweis-Geber-Plug-Ins (API) und des dazugehörigen Skripts (S) des Hinweis-Geber-Plug-Ins (API).

Es ist beispielsweise möglich, dass durch den Hinweis-Geber-Plug-In (API) API-3 sowohl in der Figur 5 dargestellten Testsituation und in der in Figur 6 gezeigten Testsituation Testrahmenbedingungen wie Speicherkapazität des Speichermediums welches die Testdaten aufnimmt beobachtet, um gegebenenfalls einen Hinweis an das Testsystem zu geben, so dass das Testsystem eine weitere Freigabe von Speicherkapazitäten ermöglichen kann. Das Hinweis-Geber-Plug-In (API) API-1 kann beispielsweise in den Testergebnissen Zusammenhänge in Kollisionsraten erkennen, wie bereits vorgestellt. Darüber hinaus kann das Hinweis-Geber-Plug-In (API) API-2 die Ausführungsdauer von Testfahrten beobachten, um gegebenenfalls Kostenabschätzungen als Hinweis für den Anwender bestimmen zu können.

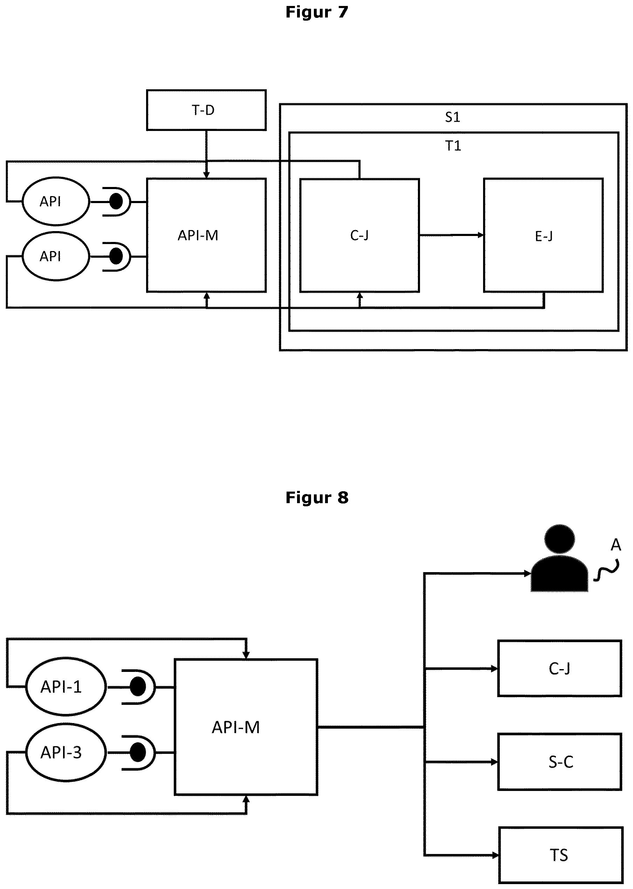

Figur 7 zeigt den Ablauf den erfindungsgemäßen Einsatz des Hinweis-Geber-Plug-In-Mechanismus und Hinweis-Geber-Plug-Ins.

Der Hinweis-Geber-Plug-In-Mechanismus (API-M) bekommt Testergebnisse von der Testausführung (E-J) beispielsweise für einen Test T1 welcher für Szenario S1 ausgeführt wird. Zusätzlich kann der Hinweis-Geber-Plug-In-Mechanismus (API-M) weitere Testdaten (T-D) aus zumindest einem Testfall erhalten. Damit können Daten auch von mehreren Testfällen einem Hinweis-Geber-Plug-In (API) bereitgestellt werden. Alle zur Verfügung stehenden Informationen werden gesammelt und gegebenenfalls aufbereitet und entsprechend ihrer jeweiligen Konfiguration automatisch an die Hinweis-Geber-Plug-Ins (API) übermittelt. Hinweis-Geber-Plug-In-Mechanismus (API-M) und Hinweis-Geber-Plug-In (API) haben definierte Schnittstellen. Die Hinweis-Geber-Plug-Ins (API) werden automatisch ausgeführt und bestimmen einen Hinweis-Wert. Gemäß dem Hinweis-Wert und der entsprechenden Konfiguration des Hinweis-Geber-Plug-Ins (API) wird ein Hinweis bestimmt. Der Hinweis wird vom Hinweis-Geber-Plug-In-Mechanismus (API-M) umgesetzt, wie beispielsweise eine Änderung der Konfiguration (C-J) für zukünftige Testausführungen.

Figur 8 zeigt mögliche Ausprägungen eines erfindungsgemäßen Hinweises. Durch das ausführbare Skript (S) eines Hinweis-Geber-Plug-In (API) wird ein Hinweis-Wert bestimmt. In der Konfigurationsdatei (C) des Hinweis-Geber-Plug-Ins (API) wird sowohl der Schwellwert als auch die Ausprägung des Hinweises festgelegt.

Der Hinweis-Geber-Plug-In-Mechanismus (API-M) steuert die automatische Ausführung der Hinweis-Geber-Plug-Ins (API) wie beispielsweise in Figur 8 gezeigt die Hinweis-Geber-Plug-Ins API-1 und API-3. Des Weiteren übernimmt der Hinweis-Geber-Plug-In-Mechanismus (API-M) die Ausführung des ermittelten Hinweises.

Eine Ausprägung eines Hinweises kann eine Warnung bzw. Ausgabe an den Anwender (A) des Testsystems (TS) sein. Beispielsweise das Hinweis-Geber-Plug-In API-3 kann die Ausführungsdauer und damit die Kosten eines Testprozesses beobachteten und bei Überschreitung einer in der Konfigurationsdatei (C) des Hinweis-Geber-Plug-in (API) festgelegten Grenze eine Warnung ausgeben.

Darüber hinaus kann eine Ausprägung des Hinweises eine Auswirkung auf die Konfiguration (C-J) neuer Testausführungen nehmen. Damit kann basierend auf Ereignisse in vorangegangene Testausführungen Parameterkonfigurationen für zukünftige Testausführungen optimiert werden. Auch eine Terminierung des laufenden Testprozesses, so dass keine weitere Konfiguration (C-J) von Testausführungen erfolgt, kann als Hinweis durch den Hinweis-Geber-Plug-In-Mechanismus (API-M) übermittelt werden.

Neben einem Hinweis für den aktuellen Testprozess kann sich der Hinweis auch auf zukünftige Testprozesse beziehen. Aus relevanten Ereignissen in den Testergebnissen aus einem Testprozess ermittelt durch ein Hinweis-Geber-Plug-In wie API-1 kann beispielsweise für das Szenario-basierte-Testen die Auswahl für zukünftig zu testende Szenarien ermittelt werden und entweder an das Testsystem (TS) zur automatischen Ausführung oder an den Anwender (A) zur manuellen Bestätigung ausgegeben werden. Auch auf die Konfiguration des Szenarios (S-C) kann sich ein Hinweis auswirken.

Die Ausführungen der Ausprägung der Hinweise sind nicht abschließend und weitere Ausprägungen sind gemäß dem erfindungsgemäßen Verfahren möglich.

## Patentansprüche

1. Computerimplementiertes Verfahren zum automatischen Bereitstellen eines Hinweises für Testprozesse, wobei der Hinweis durch zumindest einen Hinweis-Geber bestimmt wird und der Hinweis-Geber für Tests und / oder Simulationen manuell und / oder automatisch gewählt wird, wobei der Hinweis-Geber zumindest zwei Testausführungen beobachtet, so dass zumindest ein Ereignis in den Testausführungen erkannt wird und zumindest ein Hinweis abgeleitet wird, wobei der Hinweis-Geber durch einen Hinweis-Geber-Mechanismus automatisch während der Testausführungen ausgeführt wird und ein durch den Hinweis-Geber ermittelter Hinweis an das Testsystem und / oder einen Anwender bereitgestellt wird.

2. Computerimplementiertes Verfahren nach Anspruch 1, **dadurch gekennzeichnet, dass** ein Hinweis für Testprozesse zumindest im Szenario-basierten-Testen und / oder Homologation und / oder weitere Testverfahren, insbesondere Requirement-basiertes-Testen und / oder Signal-basiertes Testen, angewendet wird.

3. Computerimplementiertes Verfahren nach Anspruch 2, **dadurch gekennzeichnet, dass** ein Szenario im Szenario-basierten-Testen zumindest ein Test einer Vorrichtung zur zumindest teilweisen autonomen Führung eines Verkehrsmittels und / oder Verkehrsteilnehmer umfasst.

4. Computerimplementiertes Verfahren nach einem der vorhergehenden Ansprüche, **dadurch gekennzeichnet, dass** zumindest ein Test und / oder eine Simulation durch zumindest einen Parameter bestimmt wird, wobei Parameter insbesondere beinhalten:
- Szenerie-Parameter umfassend zumindest eines der Merkmale: die Anzahl von und / oder die Breite eines Fahrstreifens und / oder Kurven und / oder Straßenbeschränkungen und / oder der Umgebungstemperatur,
- Fahrsituationsparameter, die die Anzahl und Eigenschaften beweglicher Objekte im Szenario beschreiben, umfassend zumindest eines der Merkmale: die Anzahl von Verkehrsteilnehmer und / oder die Anzahl von Spurwechsel in einer Verkehrssituation und / oder die Geschwindigkeit der Verkehrsteilnehmer und / oder Verkehrsmittel.

5. Computerimplementiertes Verfahren nach einem der vorhergehenden Ansprüche, **dadurch gekennzeichnet, dass** Verkehrsmittel und / oder Verkehrsteilnehmer zumindest Ego-Fahrzeuge und / oder Fellow-Fahrzeuge umfasst, wobei ein Ego-Fahrzeug das Fahrzeug mit dem zu testenden System (SUT) ist und ein Fellow-Fahrzeug ein beliebig weiteres Fahrzeug ist.

6. Computerimplementiertes Verfahren nach Anspruch 1, **dadurch gekennzeichnet, dass** ein Hinweis-Geber als Hinweis-Geber-Plug-In ausgebildet ist und ein Hinweis-Geber-Plug-In eine definierte Schnittstelle zu einem Hinweis-Geber-Plug-In-Mechanismus aufweist und ein Hinweis-Geber-Plug-In eine Konfigurationsbeschreibung und ein durch einen Computer ausführbares Skript umfasst.

7. Computerimplementiertes Verfahren nach Anspruch 6, **dadurch gekennzeichnet, dass** Hinweis-Geber-Plug-Ins dynamisch und wiederverwendbar für Tests und / oder Simulationen gewählt werden können.

8. Computerimplementiertes Verfahren nach einem der vorhergehenden Ansprüche, **dadurch gekennzeichnet, dass** der Hinweis-Geber-Mechanismus durch einen Hinweis-Geber-Plug-In-Mechanismus ausgebildet ist und zumindest ein Hinweis-Geber-Plug-In beinhaltet und alle im Hinweis-Geber-Plug-In-Mechanismus ausgewählten Hinweis-Geber-Plug-Ins zur Testausführung automatisch ausgeführt werden.

9. Computerimplementiertes Verfahren nach einem der vorhergehenden Ansprüche, **dadurch gekennzeichnet, dass** Hinweis-Geber-Plug-Ins über zumindest zwei Testausführung von zumindest einem Testfall hinweg Testergebnisse und / oder Testdaten beobachten und / oder Ereignisse in Testergebnissen und / oder Testdaten detektieren und / oder einen Hinweis-Wert bestimmen.

10. Computerimplementiertes Verfahren nach einem der vorhergehenden Ansprüche, **dadurch gekennzeichnet, dass** ein Hinweis-Geber-Plug-In einen Hinweis-Wert bestimmt und wenn in der Konfigurationsbeschreibung des Hinweis-Geber-Plug-Ins ein Schwellwert für den Hinweis-Wert angegeben ist und wenn der Hinweis-Wert den Schwellwert überschreitet, die Erzeugung eines Hinweises ausgelöst wird.

11. Computerimplementiertes Verfahren nach einem der vorhergehenden Ansprüche, **dadurch gekennzeichnet, dass** der gemäß eines Hinweis-Wertes angegebene Hinweis eine Benachrichtigung an einen Anwender und / oder eine Terminierung des Testprozesses und / oder eine Anpassung des Testprozesses durch das Testsystem, insbesondere durch Änderung zumindest eines Parameters einer Simulation und / oder Tests umfasst.

12. Computerimplementiertes Verfahren nach einem der vorhergehenden Ansprüche, **dadurch gekennzeichnet, dass** ein durch ein Hinweis-Geber-Plug-In detektiertes Ereignis in Testergebnissen der zumindest zwei Testausführungen und / oder in Testdaten der zumindest einen Testausführung identifiziert wird.

13. Testeinheit zum automatischen Bereitstellen eines Hinweises für Testprozesse, wobei der Hinweis durch zumindest einen Hinweis-Geber bestimmt wird und der Hinweis-Geber für Tests und / oder Simulationen manuell und / oder automatisch gewählt wird, wobei der Hinweis-Geber zumindest zwei Testausführungen beobachtet, so dass zumindest ein Ereignis in den Testausführungen erkannt wird und zumindest ein Hinweis abgeleitet wird, wobei der Hinweis-Geber durch einen Hinweis-Geber-Mechanismus automatisch während der Testausführungen ausgeführt wird und ein durch den Hinweis-Geber ermittelter Hinweis an das Testsystem und / oder einen Anwender bereitgestellt wird.

14. Computerprogramm mit Programmcode, um das Verfahren nach einem der Ansprüche 1 bis 12 durchzuführen, wenn das Computerprogramm auf einem Computer ausgeführt wird.

15. Computerlesbarer Datenträger mit Programmcode eines Computerprogramms, um das Verfahren nach einem der Ansprüche 1 bis 12 durchzuführen, wenn das Computerprogramm auf einem Computer ausgeführt wird.
